# Europäisches Patentamt

# European Patent Office

# Office européen des brevets

(11) Publication number: **0 008 217 B1**

(12) **EUROPEAN PATENT SPECIFICATION**

(45) Date of publication of patent specification: **20.07.83**

(51) Int. Cl.³: **G 01 N 3/00, G 01 N 29/04**

(21) Application number: **79301588.4**

(22) Date of filing: **06.08.79**

(54) **Non-destructive testing method for brazed butt joints in metallic articles and metallic articles tested thereby.**

(30) Priority: **04.08.78 GB 3236278**

(43) Date of publication of application:
**20.02.80 Bulletin 80/4**

(45) Publication of the grant of the patent:
**20.07.83 Bulletin 83/29**

(84) Designated Contracting States:
**AT BE CH DE FR GB IT LU NL SE**

(56) References cited:
**AU - B - 2 036 770**
**GB - A - 1 282 812**

**ISA TRANSACTIONS, vol. 11, no. 1, 1972,
pages 24—30
Pittsburg, U.S.A.
J. H. GIESKE: "An NDT Investigation of the
Behavior of Acoustic Emission from a Brazed
Metal to Ceramic Bond"**

**MACHINE MODERNE, no. 774, September
1973, pages 39—41
Paris, FR.
M. GRANDON: "Le contrôle de la qualité des
soudures"**

(73) Proprietor: **EUROPEAN ATOMIC ENERGY
COMMUNITY (EURATOM)
Batiment Jean Monnet Plateau du Kirchberg Boîte
Postale 1907
Luxembourg (LU)**

(72) Inventor: **Huguet, Michel
12 Lakeside
Oxford (GB)**
Inventor: **Booth, Joseph
76 Sunderland Avenue
Oxford (GB)**
Inventor: **Lyraud, Charles
White House Horn Lane
East Hendred Wantage, Oxfordshire (GB)**
Inventor: **Pöhlchen, Rudolph
Turkenstrasse 16
D-8046 Garching (DE)**
Inventor: **Lehr, Klaus
Steingrundstrasse 42
D-6940 Weinheim (DE)**
Inventor: **Haring, Klaus
Ausseneck 10
D-6800 Mannheim (DE)**

(74) Representative: **Baverstock, Michael George
Douglas et al,
BOULT, WADE & TENNANT 27 Furnival Street
London, EC4A 1PQ (GB)**

## Non-destructive testing method for brazed butt joints in metallic articles
### and metallic articles tested thereby

This invention relates to a method for the non-destructive testing of brazed butt joints in metallic articles such as bars, tubes, and electrical conductors, especially heavy duty copper electrical conductors, and to metallic articles tested thereby.

The following prior art has come to the notice of the Applicant: British Patent No. 1282812, Australian Patent No. 20367/70 and J. H. Grieske, ISA: Transactions Vol. 11 No. 1, 1972.

It is known from GB—A—1282812 to use a method of non-destructive testing for defects in joints in metallic, in particular hollow copper, articles, which method comprises subjecting the joint to a tensile force which is greater than the yield strength of the metal of the metallic article across the joint and thereafter passing an X-ray beam or an ultrasonic pulse through the joint to detect any gap which has been formed at the joint by the application of the tensile force. Articles so tested are also known.

Much equipment in industry and research requires the use of thick copper conductors. Typical of use of equipment are magnet coils for accelerators and fusion machines, turbogenerators for power stations and high frequency ovens. In order to increase the efficiency of these types of equipment the trend nowadays is to use hollow copper conductors which can be cooled by the internal circulation of water. Since copper conductors cannot be extruded in very long lengths, short lengths must necessarily be joined together trunkwise. The technique which is most widely used in industry is to braze together short lengths of copper conductors by means of a silver/copper alloy.

A problem concerning such brazed joints is to guarantee the quality of the joint. Obtaining a good joint under factory conditions is not very easy, since many parameters may affect the brazing process. The most important parameter is certainly cleanliness, but also the heating method and heating cycle are important.

However, joints without defects are essential for equipment such as magnet coils and turbogenerators, where the joints are subjected to severe mechanical cycling. The problem is to limit the cases of failure to a strict minimum, if not to eliminate any risk in this respect, by an appropriate inspection technique.

The manner in which the well-known non-destructive methods for testing brazed joints are applied varies according to the operating conditions to which the equipment containing the joints is subjected, which may include mechanical and thermal stresses, and to the functional importance of the equipment. For equipment where high reliability is essential, the method of testing hollow conductors consists usually of the following steps: a check on the tightness of the joint (by a water pressure test and/or helium leak test; and a mechanical test (tensile test) at a stress level set according to the operating conditions to which the equipment is to be subjected.

This method of testing has a very serious shortcoming: it gives an indication on the quality of the joint just after the joint was made, but it does not give any indication of the future behaviour of the joint, for instance under repeated mechanical stresses.

Furthermore, many attempts have been made to improve inspection methods using X-rays or ultrasonic equipment. As is well-known, X-ray inspection methods involve passing a relatively hard beam of X-rays of wavelength 0.4 Å or less through the metallic article being inspected and examining the density distribution of the transmitted beam. Faults in the article can be detected as variations in the density distribution if they produce a degree of variation in density which can be detected. Ultrasonic testing involves applying pulses of high frequency sound waves to the surface of the article being tested which are transmitted through the material and reflected back from the opposite surface. Discontinuities in the material reflect back a portion of the signal before the main beam reaches the opposite surface of the article and such reflections may be recorded and detected with an oscilloscope.

However, the results obtained have been discouraging for several reasons.

The brazed joint interphase is a very thin film, usually less than 0.1 mm in thickness. When X-rays are used for the inspection of the joint, only density variation in the material being tested and therefore of the transmitted X-ray beam is measured, and therefore the critical parameter is the ratio between the dimensions of the defect and the thickness of the copper conductor. An internal flaw in the joint such as a lack of brazing material cannot usually be detected because it is too thin compared to the thickness of the copper. Some defects are due to a lack of wetting action between the copper and the brazing material. This is usually the result of insufficient cleanliness. Such a type of defect is totally undetectable by X-rays and ultrasonic equipment because the two copper surfaces at the joint are in contact and hence there is no cavity in the joint.

The present invention as hereinafter described provides an improved non-destructive test method for the inspection of brazed joints during routine manufacture, which not only permits the optimal type of joint, to be used i.e. the butt joint, but also enables the aforementioned conventional X-ray and ultrasonic tests to be employed, and thus the future stress behaviour of the joint can reliably be predicted.

In accordance with the present invention there is provided a method of non-destructive testing for defects in joints in metallic, in particular hollow copper, articles, which method comprises subjecting the joint to a tensile force which is greater than the yield strength of the metal of the metallic article across the joint and thereafter passing an X-ray beam or an ultrasonic pulse through the joint to detect any gap which has been formed at the joint by the application of the tensile force, characterised in that brazed butt joints are tested and in that the tensile force is applied to the brazed butt joints substantially in the absence of any bending moment.

The invention also providers a metallic article having a joint which has been subjected to a tensile force which is greater than the yield strength of the metal of the article across the joint and thereafter has had an X-ray beam or an ultrasonic pulse passed through the joint for the purpose of detecting any gap which may have been formed at the joint by the application of the tensile force, characterised in that the joint is a brazed butt joint and in that the tensile force was applied to the brazed butt joint substantially in the absence of any bending moment.

Preferably the method is incorporated as one step in a production process for the article having a brazed butt joint therein.

In the accompanying drawings:

Figure 1 is a perspective view, partially in section, of a hollow copper electrical conductor which includes a brazed butt joint; and

Figures 2(a) and 2(b) show sections through parts of two hollow copper conductors which contain two of the four types of brazed joints which are described above, viz. (a) a butt joint, and (b) a butt joint with additional sleeve.

In its preferred embodiments, the present invention can be applied to copper articles, particularly hollow copper electrical conductors, in which the brazed joint is a butt joint.

Desirably the present test method is incorporated as one step in the manufacturing process of the final article having a brazed butt joint therein.

In the accompanying drawings three jointed metallic articles are shown, to which the present test method can be applied. In each of the Figures, a copper conductor 1 is shown having formed therein a brazed butt joint 2. The conductor 1 is formed with a hollow core through which a cooling channel 3 passes.

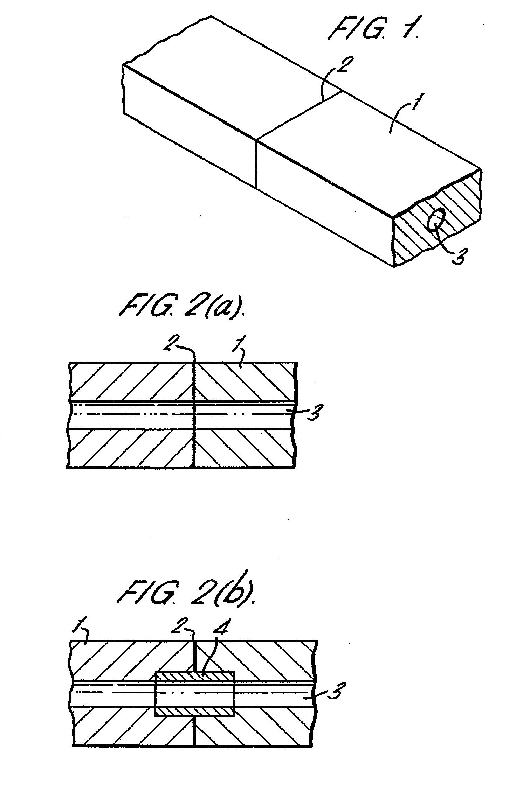

Figures 1 and 2(a) show the joint as a simple butt joint, whilst in Figure 2(b) an additional internal sleeve 4 has been provided in the joint.

It is probably that, because of the stress hardening effect produced in the joint area by the application of the excess tensile stress in the method of the invention, the joints will have proved to be neither weakened nor damaged, so that if the subsequent radiation test identifies a defect in the joint, the defect can only be attributed to unsatisfactory brazing. On the other hand the absence of a defect signal guarantees the absence of a fault in the joint. In other words, the X-ray or ultrasonic test which was hitherto unreliable when it gave no defect signal is made reliable by the application of the method of the present invention.

In the case of copper conductors, although the tensile test produced a considerable yielding of the copper at the brazed joint in tests by the Applicant, fatigue tests on the brazed joints applying a repeated tensile load for up to $2.5 \times 10^5$ cycles have conclusively proved that the fatigue strength of the jointed area is similar to that of copper without a joint. If a defect in the joint layer is present the two copper surfaces which are not properly brazed will separate significantly during the tensile test. As a result of this permanent sparation, each defect, even very small ones, can now be identified easily by the afore-mentioned X-ray and ultrasonic inspection techniques because of the artificial transformation of the discontinuity defect into a significant gap by the application of the tensile force.

The separation produced depends mainly on the tensile force applied. With a tensile force of $80 \text{ N/mm}^2$, the separation gap is typically about 1 mm. The traction time is not significant. With a conventional hydraulic jack only a few seconds are required. The method of the invention can be applied to any cross-section of copper. During the application of the tensile force there is a slight reduction of cross-section (a few per cent) due to elongation, but this does not generally give rise to any problem of substance.

A brazing material which has been used in tests in which the Applicants have satisfactorily performed is Silphos (5% phosphorus, 15% Silver, and the remainder, copper) using a brazing temperature of 710°C (according to DIN Standard Number 8513 this material is called L.Ag 15 P).

The method of test according to the invention will allow the manufacturer to give an absolute guarantee of the quality of a brazed butt joint and of all of the joints in a specific lot. Until now, only random destructive tests could be made in order to check on the quality of joints and in a large production run involving several hundreds of joints, for example in the production of magnet coils, the possibility of having at least one defective joint could not hitherto be excluded.

**Claims**

1. A method of non-destructive testing for defects in joints in metallic, in particular hollow copper, articles, which method comprises subjecting the joint to a tensile force which is greater than the yield strength of the metal of the metallic article across the joint and thereafter passing an X-ray beam or an ultrasonic pulse through the joint to detect any gap which has been formed at the joint by the application of the tensile force, characterised in that brazed butt joints are tested and in that the tensile force is applied to the brazed butt joint substantially in the absence of any bending moment.

2. A method as claimed in claim 1 characterised in that the method is incorporated as one step in a production process for the article having a brazed butt joint therein.

3. A metallic article having a joint which has been subjected to a tensile force which is greater than the yield strength of the metal of the article across the joint and thereafter has had an X-ray beam or an ultrasonic pulse passed through the joint for the purpose of detecting any gap which may have been formed at the joint by the application of the tensile force, characterised in that the joint is a brazed butt joint and in that the tensile force was applied to the brazed butt joint substantially in the absence of any bending moment.

## Revendications

1. Procédé d'essai non destructif pour détecter les défauts de joints de produits métalliques, en particulier de produits creux en cuivre, selon lequel on soumet, le joint à un effort de traction supérieur à la limite élastique du métal du produit au droit du joint et on fait passer ensuite un faisceau de rayons X ou une impulsion sonore par le joint pour détecter tout intervalle ayant pu se former au joint par l'application de leffort de traction, caractérisé en ce que l'on effectue les essais de joints bout à bout brasés et on applique l'effort de traction aux joints en l'absence sensiblement complète de tout moment de flexion.

2. Procédé selon la revendication 1, caractérisé en ce que l'on effectue la mise en oeuvre du procédé comme une opération incluse dans un processus de fabrication d'un produit comportant un ou plusieurs joints brasés bout à bout.

3. Produit métallique comportant un joint qui a été soumis à un effort de traction supérieur à la limite élastique du métal du produit au droit du joint et où on a fait passer ensuite un faisceau de rayons X ou une impulsion ultrasonore par le joint dans le but détecter tout intervalle ayant pu se former au joint par l'application de l'effort de traction, caractérisé en ce que le joint est un joint brasé bout à bout et que l'effort de traction a été appliqué au joint en l'absence sensiblement complète de tout moment de flexion.

## Patentansprüche

1. Verfahren zur zerstörungsfreien Fehlerprüfung bei Verbindungsstellen von metallischen, insbesondere hohlen Kupferkörpern, wobei die Verbindungsstelle über ihren Querschnitt einer Zugkraft ausgesetzt wird, die größer ist als die Streckgrenze des den metallischen Körpers bildenden Metalls, und wobei danach zum Nachweis etwa an der Verbindungsstelle bei Anwendung der Zugkraft gebildeter Lücken Röntgenstrahlen oder in Ultraschallwellenimpuls durch die Verbindungsstelle geschickt werden, dadurch gekennzeichnet, daß der Prüfung gelötete Stoßverbindungen unterzogen werden und daß die Zugkraft auf die gelöteten Stoßstellen im wesentlichen bei Abwesenheit eines Biegungsmomentes ausgeübt wird.

2. Verfahren nach Anspruch 1, dadurch gekennzeichnet, daß es eine Stufe eines Herstellungsverfahrens für gelötete Stoßstellen aufweisende Körper ist.

3. Metallischer Körper mit einer Verbindungsstelle, die über ihren Querschnitt einer Zugkraft ausgesetzt worden ist, die größer ist als die Streckgrenze des den metallischen Körper bildenden Metalls, und wobei zum Nachweis etwa an der Verbindungsstelle bei Anwendung der Zugkraft gebildeter Lücken Röntgenstrahlen oder ein Ultraschallwellenimpuls durch die Verbindungsstelle geschickt sind, dadurch gekennzeichnet, daß die Verbindungsstelle eine gelötete Stoßverbindung ist und daß die Zugkraft auf die gelötete Stoßstelle weitgehend bei Abwesenheit eines Biegungsmomentes ausgeübt worden ist.

FIG. 1.

FIG. 2(a).

FIG. 2(b).

1